# EUROPÄISCHE PATENTSCHRIFT

(11) **EP 0 888 589 B1**
(45) Veröffentlichungstag und Bekanntmachung des Hinweises auf die Patenterteilung: **27.10.1999**
(21) Anmeldenummer: 97916334.2
(22) Anmeldetag: 06.03.1997
(51) Int. Cl.: G06F 13/40

(54) **ANSCHALTVERFAHREN UND BUSANSCHALTUNG ZUM ANSCHALTEN EINER BAUGRUPPE EINER SPEICHERPROGRAMMIERBAREN STEUERUNG AN EINEN BUS**
CONNECTING PROCESS AND BUS INTERFACE FOR CONNECTING A SUBASSEMBLY OF A PROGRAMMABLE CONTROLLER TO A BUS
PROCEDE DE CONNEXION ET INTERFACE DE BUS POUR CONNECTER UN MODULE DE CONTROLEUR PROGRAMMABLE A UN BUS

(30) Priorität: 18.03.1996 DE 19610557
(43) Veröffentlichungstag der Anmeldung: 07.01.1999
(73) Patentinhaber: SIEMENS AKTIENGESELLSCHAFT, 80333 München (DE)
(72) Erfinder: MAUL, Jürgen, D-92237 Sulzbach-Rosenberg (DE)
(86) Internationale Anmeldenummer: DE9700435
(87) Internationale Veröffentlichungsnummer: WO9735261

(56) Entgegenhaltungen:
- EP-A- 0 402 055
- WO-A-93/15459

## Beschreibung

Die vorliegende Erfindung betrifft ein Anschaltverfahren zum Anschalten einer Baugruppe einer speicherprogrammierbaren Steuerung an einen Bus,
- wobei die Baugruppe zumindest über eine erste und eine zweite Versorgungsleitung und eine Signalleitung an den Bus anschließbar ist,
- wobei in mindestens einer der Versorgungsleitungen ein veränderlicher Widerstand angeordnet ist, der von einer Auswerteschaltung hochohmig oder niederohmig steuerbar ist,
- wobei die Auswerteschaltung bei nicht an den Bus angeschlossener Baugruppe den veränderlichen Widerstand hochohmig steuert,
und eine Busanschaltung zum Anschalten einer Baugruppe einer speicherprogrammierbaren Steuerung an einen Bus,
- wobei die Baugruppe zumindest über eine erste und eine zweite Versorgungsleitung und eine Signalleitung an den Bus anschließbar ist,
- wobei in mindestens einer der Versorgungsleitungen ein veränderlicher Widerstand mit einem Steuereingang angeordnet ist, der mit einer Auswerteschaltung verbunden ist, mittels derer der veränderliche Widerstand hochohmig oder niederohmig steuerbar ist.

Aus der EP 0 388 753 A1 ist bekannt, bei einer Baugruppe voreilende Kontakte vorzusehen, mittels derer die Stromversorgungskontakte vor den anderen Kontakten der Baugruppe mit einem Baugruppenträger kontaktiert werden können. In den Versorgungsleitungen auf der Baugruppe ist dabei ein Widerstand angeordnet, der durch einen Schalter überbrückt werden kann.

Der Schalter wird erst dann betätigt, wenn ein auf der Baugruppe angeordneter Pufferkondensator hinreichend aufgeladen ist.

Aus der DE 39 42 480 C2 ist eine ähnliche Schaltungsanordnung bekannt. Auch hier sind voreilende Versorgungskontakte und ein elektronischer Schalter vorhanden, wobei der elektronische Schalter eine der Versorgungsleitungen direkt an die Last ankoppelt und der Schalter erst dann geschlossen wird, wenn sich ein Pufferkondensator hinreichend aufgeladen hat.

Mittels des obengenannten Standes der Technik ist das Problem einer unzulässigen Rückwirkung auf den Bus, an den die Baugruppen beim Einstecken angeschlossen werden gelöst, wenn die Baugruppen ordnungsgemäß funktionieren. Falls jedoch die eigentliche Nutzschaltung fehlerhaft ist, insbesondere einen Kurzschluß aufweist, kann es geschehen, daß durch das Einstecken der zusätzlichen (fehlerbehafteten) Baugruppe die Stromversorgung eines ganzen Systems zusammenbricht.

Ein Anschaltverfahren gemäß dem Oberbegriff des Anspruchs 1 ist aus der WO/93 15 459 bekannt. Aus vergleichbarem technischen Zusammenhang ist gemäß der EP-A-0 402 055 das Abwarten einer Hochlaufzeit zur Busanschaltung allgemein bekannt.

Die Aufgabe der vorliegenden Erfindung besteht darin, ein aus mehreren Baugruppen bestehendes Gesamtsystem auch dann lauffähig zu erhalten, wenn während des Betriebes eine fehlerbehaftete Baugruppe an das Gesamtsystem angeschlossen wird.

Die Aufgabe wird bei einem gattungsgemäßen Anschaltverfahren durch folgende Schritte gelöst:
- beim Verbinden der Baugruppe mit dem Bus wird der veränderliche Widerstand niederohmig gesteuert,
- nach dem Niederohmigsteuern des veränderlichen Widerstands wird eine Hochlaufzeit abgewartet,
- der veränderliche Widerstand wird wieder hochohmig gesteuert, wenn ein an einem Prüfeingang der Auswerteschaltung anstehendes Potential nach Ablauf der Hochlaufzeit außerhalb eines vorbestimmten Wertebereichs liegt und erst nach Ablauf einer Verbindungszeit niederohmig gesteuert.

Bei der gattungsgemäßen Busanschaltung wird das Problem-dadurch gelöst,
- daß die Auswerteschaltung einen Prüfeingang aufweist, mittels dessen das an der Baugruppe anstehende Potential erfaßbar ist, und
- daß die Auswerteschaltung derart ausgebildet ist, daß sie
   -- bei nicht an den Bus angeschlossener Baugruppe den veränderlichen Widerstand hochohmig steuert,
   -- beim Verbinden der Baugruppe mit dem Bus den veränderlichen Widerstand niederohmig steuert,
   -- nach dem Niederohmigsteuern des veränderlichen Widerstands eine Hochlaufzeit abwartet,
   -- den veränderlichen Widerstand wieder hochohmig steuert, wenn das an dem Prüfeingang anstehende Potential nach Ablauf der Hochlaufzeit außerhalb eines vorbestimmten Wertebereichs liegt und
   -- den veränderlichen Widerstand erst nach Ablauf einer Verbindungszeit niederohmig steuert.

Dadurch, daß der veränderliche Widerstand erst nach Ablauf einer Verbindungszeit durch die Auswerteschaltung niederohmig gesteuert wird, wird erreicht, daß die Baugruppe mit Sicherheit erst dann an den Bus angeschlossen wird, wenn alle Kontakte der Baugruppe mit den korrespondierenden Buskontakten verbunden sind. Unzulässige Störungen auf dem Bus werden dadurch vermieden.

Durch die Maßnahmen nach Anspruch 2 bzw. 9 wird erreicht, daß die Baugruppe weich an den Bus angekoppelt wird. Rückwirkungen auf den Bus beim Ankoppeln der Baugruppe werden dadurch noch weiter reduziert.

Durch die Maßnahmen nach Anspruch 3 bzw. 10 wird erreicht, daß beim Anschließen einer fehlerhaften Baugruppe die über den Bus übertragenen Signale möglichst wenig beeinflußt werden.

Durch die Maßnahmen nach Anspruch 4 und 5 bzw. 11 wird erreicht, daß die Baugruppe nur dann datentechnisch an den Bus angeschlossen wird, wenn sie auch über den Bus kommunizieren kann. Störungen des Busverkehrs werden dadurch vermieden.

Weitere Vorteile und Einzelheiten ergeben sich aus der nachfolgenden Beschreibung eines Ausführungsbeispiels und den weiteren Ansprüchen. Dabei zeigen:
- FIG 1: eine modulare speicherprogrammierbare Steuerung,
- FIG 2: den Anschluß einer Baugruppe der speicherprogrammierbaren Steuerung an den Bus und
- FIG 3: den Ablauf des Ankoppelns einer Baugruppe an den Bus.

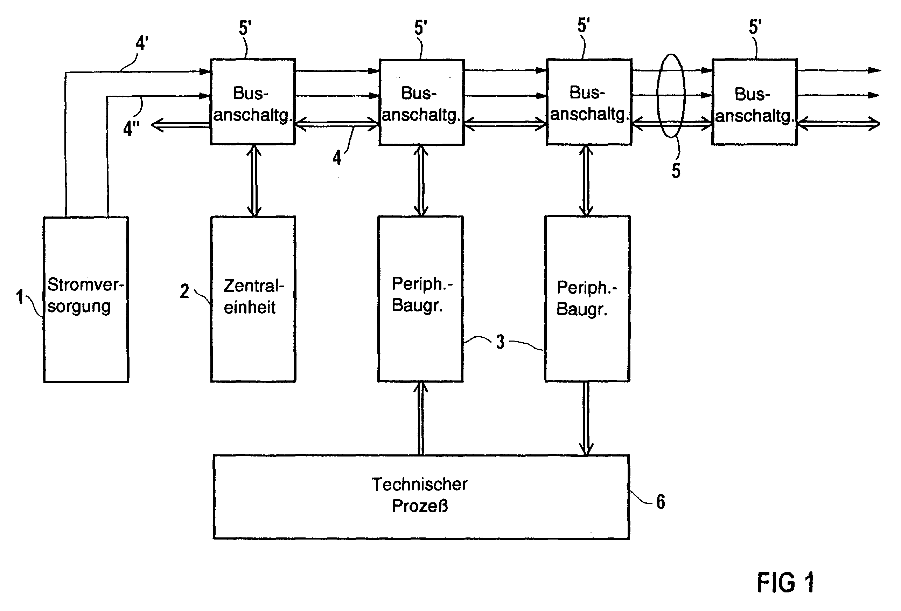

Gemäß FIG 1 besteht eine modulare speicherprogrammierbare Steuerung aus einer Stromversorgungsbaugruppe 1, einer Zentraleinheit 2 und Peripheriebaugruppen 3. Die Peripheriebaugruppen 3 können beispielsweise digitale oder analoge Eingabe- bzw. Ausgabebaugruppen sein. Ferner können die Peripheriebaugruppen 3 auch gemischte Ein-/Ausgabebaugruppen oder intelligente Funktionsmodule sein. Über die Peripheriebaugruppen 3 steuert und kontrolliert die Zentraleinheit 2 einen technischen Prozeß 6, z.B. eine Chemieanlage oder eine hydraulische Presse.

Die Zentraleinheit 2 und die Baugruppen 3 sind hierzu über den Steuerungsbus 4 datentechnisch miteinander verbunden. Die Zentraleinheit 2 und die Peripheriebaugruppen 3 werden ferner über die Versorgungsleitungen 4',4" mit elektrischer Energie versorgt. Über die Versorgungsleitung 4" wird eine gemeinsame Masseverbindung hergestellt, die Versorgungsleitung 4' führt üblicherweise ein Potential von + 5 Volt. Steuerungsbus 4 und Versorgungsleitungen 4',4" bilden zusammen den Rückwandbus 5 der speicherprogrammierbaren Steuerung. Wie aus FIG 1 ersichtlich ist, ist der Rückwandbus 5 in einzelne Busanschaltungen 5' aufgeteilt, die jeweils einer Baugruppe 2,3 zugeordnet sind.

Im obenstehenden Beispiel sind nur zwei Peripheriebaugruppen 3 dargestellt. Selbstverständlich könnte die speicherprogrammierbare Steuerung aber auch mehr Baugruppen aufweisen, z.B. 5,8,10... Ferner kann der Steuerungsbus 4 nach Bedarf ausgelegt sein. So kann der Steuerungsbus 4 beispielsweise ein serieller Bus sein, der im Miminalfall lediglich eine Takt- und eine Datenleitung umfaßt. Der Steuerungsbus 4 könnte aber auch ein paralleler Bus sein, der eine Vielzahl von Adress-, Daten- und Steuerleitungen umfaßt. Die Leitungen des Steuerungsbusses 4 bilden die Signalleitungen der vorliegenden Erfindung.

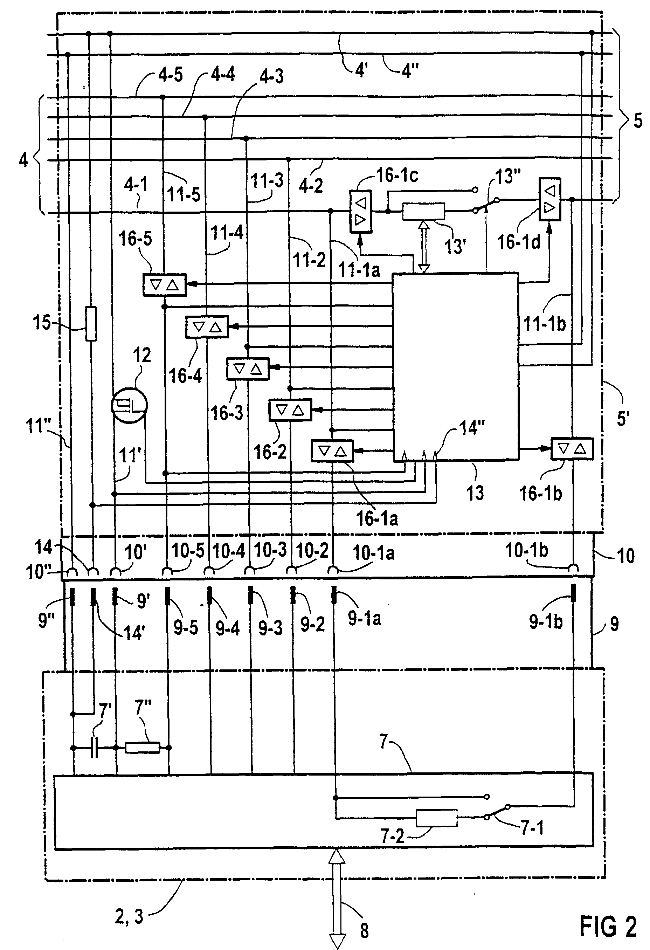

FIG 2 zeigt nun eine derartige Busanschaltung. Wie aus FIG 2 ersichtlich ist, ist der Steuerungsbus 4 im vorliegenden Fall ein serieller Bus. Er weist fünf Leitungen 4-1 bis 4-5 auf. Die Leitung 4-1 ist eine bidirektionale Datenleitung. Die Leitung 4-2 ist die Taktleitung, über die das allen Baugruppen 2,3 gemeinsame Taktsignal übertragen wird. Mittels der Steuerleitungen 4-3 und 4-4 wird angezeigt, ob momentan eine Daten- bzw. eine Befehlsübertragung stattfindet. Über die Rückmeldeleitung 4-5 können die Baugruppen 3 an die Zentraleinheit 2 melden, daß sie die übertragenen Daten ordnungsgemäß gesendet bzw. empfangen haben. Die Leitungen 4-2 bis 4-5 werden unidirektional betrieben.

Bei einer Befehlsübertragung überbrücken die angeschlossenen Baugruppen 3 die Datenleitung 4-1 mittels eines Schalters 7-1 und koppeln ein Schieberegister 7-2 an die Datenleitung 4-1 an. Bei einer Datenübertragung werten die Baugruppen 3 den zuletzt übertragenen Befehl aus und schleifen entweder das Schieberegister 7-2 in die Datenleitung 4-1 ein oder überbrücken die Datenleitung 4-1 mittels des Schalters 7-1.

Wie aus FIG 2 ersichtlich ist, weist die an den Bus 5 angeschlossene Baugruppe 2,3 eine interne Schaltung 7 auf. Im Falle einer Peripheriebaugruppe 3 ist diese ferner über die Prozeßleitungen 8 mit dem technischen Prozeß 6 verbunden. In jedem Fall aber ist die Baugruppe über den Steckanschluß 9 in den Steckplatz 10 der Busanschaltung 5' eingesteckt und so mit dem Bus 5 verbunden. Die datentechnische Ankopplung der Baugruppe 2,3 an den Bus 5 erfolgt dabei über die Datenkontakte 9-1a,9-1b,10-1a und 10-1b, die Taktkontakte 9-2 und 10-2, die Steuerkontakte 9-3, 10-3 und 9-4, 10-4 sowie die Rückmeldekontakte 9-5,10-5.

Die Stromversorgung der Baugruppe 2,3 hingegen erfolgt über die Versorgungskontakte 9',9" und 10',10". In der Verbindungsleitung 11' zwischen der Versorgungsleitung 4' und dem Versorgungskontakt 10' ist ein MOSFET 12 angeordnet. Der Durchgangswiderstand des MOSFET 12 ist bekanntermaßen innerhalb weiter Grenzen veränder- und einstellbar. Der MOSFET 12 stellt also den veränderlichen Widerstand der vorliegenden Erfindung dar. Der MOSFET 12 wird von der Auswerteschaltung 13, die ebenfalls mit den Versorgungsleitungen 4',4" verbunden ist, durch Anlegen eines entsprechenden Steuersignals an den Steuereingang des MOSFET 12 hochohmig oder niederohmig gesteuert.

Ferner weist der Steckplatz 10 einen Prüfkontakt 14 auf, der direkt mit dem Prüfeingang 14" der Auswerteschaltung 13 und über den Pullwiderstand 15 mit der Versorgungsleitung 4' verbunden ist. In der Verbindungsleitung 11" hingegen ist kein Widerstand, weder fest noch veränderlich, angeordnet.

Der Auswerteschaltung 13 werden als Eingangssignale im wesentlichen das am Versorgungskontakt 10' anstehende Potential, das am Prüfkontakt 14 anstehende Potential sowie das am Rückmeldekontakt 10-5 anstehende Potential zugeführt. Unter Auswertung dieser Eingangssignale steuert die Auswerteschaltung 13 die (bidirektionalen) sperrbaren Treiber 16-1a bis 16-ld sowie die (ebenfalls bidirektionalen) sperrbaren Treiber 16-2 bis 16-5 an, die in den Signal-Verbindungsleitungen 11-1a, 11-1b und 11-2 bis 11-5 angeordnet sind. Die sperrbaren Treiber 16-x können beispielsweise Tristate-Treiber sein. Es sind aber auch andere Ausgestaltungen denkbar.

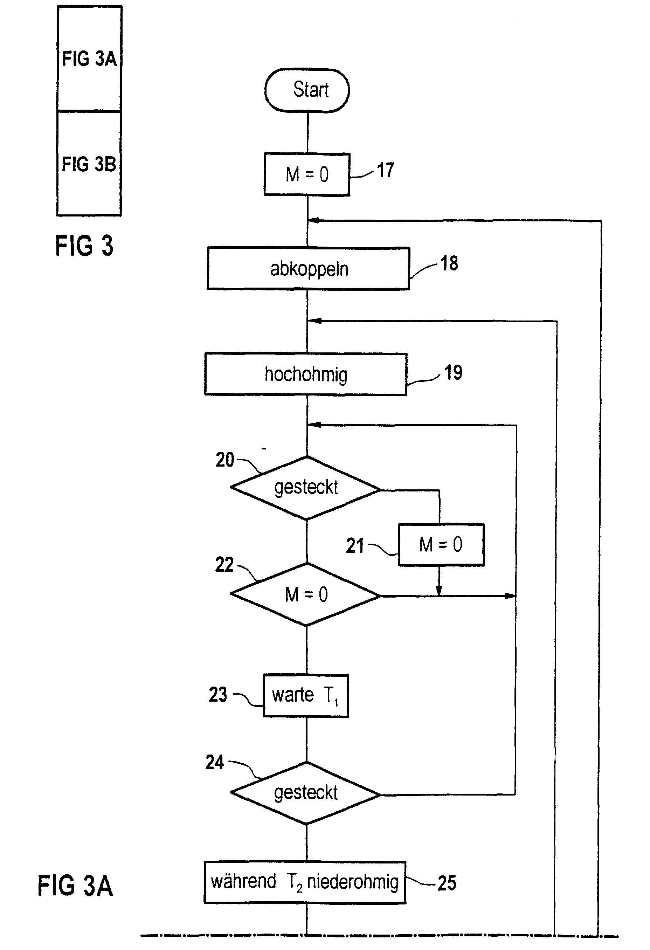

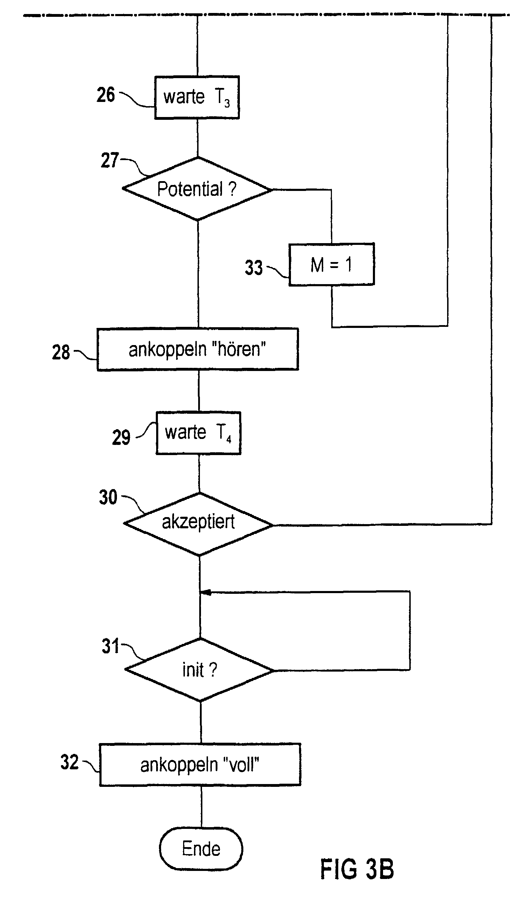

Die Details der Ansteuerung werden nunmehr in Verbindung mit den FIG 2 und 3 eingehend erläutert.

Vor dem Einstecken der Baugruppe 2,3 in den Steckplatz 10 befindet sich die Busanschaltung 5' im Initialisierungszustand. Bei der Initialisierung wird gemäß Block 17 zunächst ein Merker M auf 0 gesetzt. Der Sinn dieses Merkers M wird später in Verbindung mit Block 33 noch näher erläutert. Sodann werden gemäß Block 18
- durch Sperren der Treiber 16-1a, 16-1b und 16-2 bis 16-5 die Signalkontakte 10-1a, 10-1b und 10-2 bis 10-5 vom Steuerungsbus 4 abgekoppelt und
- durch Durchschalten der Treiber 16-1c und 16-1d die Auswerteschaltung 13 an die Datenleitung 4-1 angekoppelt.
Schließlich wird gemäß Block 19 der MOSFET 12 von der Auswerteschaltung 13 hochohmig gesteuert.

Sodann wird im Block 20 geprüft, ob eine Baugruppe 2,3 in den Steckplatz 10 eingesteckt ist. Dies geschieht durch Auswerten des am Prüfkontakt 14 anstehenden Potentials. Wenn dieses Potential dem Potential der Versorgungsleitung 4' entspricht, ist keine Baugruppe 2,3 in den Steckplatz 10 eingesteckt. Wenn hingegen eine Baugruppe 2,3 in den Steckplatz 10 eingesteckt wird, ist der Prüfkontakt 14 über den Gegenkontakt 14' direkt mit der Versorgungsleitung 4" verbunden, so daß die Auswerteschaltung 13 den Potentialwechsel detektieren kann.

Wenn in den Steckplatz 10 keine Baugruppe 2,3 eingesteckt ist (rechter Zweig), wird der Merker M im Block 21 auf 0 gesetzt und die Abfrage gemäß Block 20 erneut durchgeführt. Wenn dagegen eine Baugruppe 2,3 gesteckt ist, wird im Block 22 abgefragt, ob der Merker M den Wert 0 hat. Wenn dies nicht der Fall ist (rechter Zweig), wird wiederum Block 20 ausgeführt.

Wenn dagegen der Merker M den Wert 0 hat, ist die Baugruppe 2,3 neu gesteckt worden. In diesem Fall wird Block 23 ausgeführt, gemäß dem der Ablauf einer Verbindungszeit T₁ abgewartet wird. Danach wird Block 24 ausgeführt, gemäß dem abgefragt wird, ob die Baugruppe 2,3 immer noch in den Steckplatz 10 eingesteckt ist. Auch diese Abfrage geschieht unter Auswertung des am Prüfkontakt 14 anstehenden Potentials. Ist die Baugruppe 2,3 nicht mehr in dem Steckplatz 10 eingesteckt (rechter Zweig) wird das weitere Ankoppeln der Baugruppe 2,3 an den Rückwandbus 5 abgebrochen und zum Block 20 zurückgekehrt. Ansonsten (unterer Zweig) steuert die Auswerteschaltung 13 den MOSFET 12 gemäß Block 25 während einer Anlaufzeit T₂ von hochohmig auf niederohmig. Dadurch daß der MOSFET 12 nicht abrupt, sondern während der Anlaufzeit T₂ niederohmig gesteuert wird, erfolgt ein sanftes Ankoppeln der Baugruppe 2,3 an die Stromversorgung des Rückwandbusses 5.

Sodann wird gemäß Block 26 der Ablauf einer Hochlaufzeit T₃ abgewartet. Während dieser Zeit wird beispielsweise der Pufferkondensator 7' der Baugruppe 2,3 aufgeladen. Nach Ablauf der Hochlaufzeit T₃ wird gemäß Block 27 geprüft, ob die Baugruppe 2,3 ordnungsgemäß mit Strom versorgt wird. Dies geschieht durch Auswerten des am Versorgungskontakt 10' anstehenden Potentials. Wenn das am Versorgungskontakt 10' anstehende Potential in etwa dem Potential der Versorgungsleitung 4' entspricht, z.B. um maximal 0,5 Volt von dessen Potential abweicht, wird dies als ordnungsgemäße Ankopplung der Stromversorgung an die Baugruppe 2,3 gewertet. In diesem Fall wird mit dem Block 28 fortgefahren. Ansonsten wird Block 33 ausgeführt, gemäß dem der Merker M auf den Wert 1 gesetzt wird, und mit Block 19 fortgefahren.

Das Setzen des Merkers M im Block 33 hat zur Folge, daß nunmehr laufend die Blöcke 20 und 22 durchlaufen werden, bis die Baugruppe 2,3 vom Steckplatz 10 getrennt wird. Dadurch wird verhindert, daß die Auswerteschaltung 13 wiederholt abwechselnd den MOSFET 12 erst niederohmig und dann wieder hochohmig steuert.

Wenn dagegen das Potential des Versorgungskontaktes 10' im zulässigen Bereich liegt, werden gemäß Block 28 die sperrbaren Treiber 16-2 bis 16-5 permanent durchgeschaltet. Ferner wird der sperrbare Treiber 16-1a bei Datenübertragungen von der Zentraleinheit 2 zu einer der Peripheriebaugruppen 3 durchgeschaltet. Der sperrbare Treiber 16-1b wird bei Datenübertragungen von einer der Peripheriebaugruppen 3 zur Zentraleinheit 2 durchgeschaltet. Dadurch kann die Baugruppe 2,3 den über den Steuerungsbus 4 erfolgenden Datenverkehr mithören, nicht aber selbst aktiv Signale über den Steuerungsbus 4 Signale senden. Die sperrbaren Treiber 16-lc und 16-ld sind in diesem Stadium permanent durchgeschaltet. Welche Datenübertragung gerade durchgeführt wird, weiß die Auswerteschaltung 13 aufgrund des über die Steuerleitungen 4-3 und 4-4 und die Datenleitung 4-1 mitgehörten Busverkehrs.

Nach dem Durchschalten der Treiber 16-x wird gemäß Block 29 eine Akzeptanzwartezeit T₄ abgewartet. Dadurch hat die Baugruppe 2,3 Gelegenheit, sich zu initialisieren. Während des Laufens der Akzeptanzwartezeit T₄ wird das am Rückmeldekontakt 10-5 anstehende Signal von der Auswerteschaltung 13 ausgewertet. Der Rückmeldekontakt 10-5 ist, wie aus FIG 2 ersichtlich ist, über den Pullwiderstand 7" mit der Versorgungsleitung 4' verbunden. Wenn die Baugruppe 2,3 während des Mithörbetriebes den über den Steuerungsbus 4 erfolgenden Datenverkehr versteht und als sinnvoll interpretiert, legt die Baugruppe 2,3 durch eine geeignete interne Verschaltung den Rückmeldekontakt 9-5 und damit selbstverständlich auch den Rückmeldekontakt 10-5 auf das Potential der Versorgungsleitung 4". Dies wird in der Auswerteschaltung 13 überwacht.

Wenn die Auswerteschaltung 13 das Akzeptanzsignal nach Ablauf der Akzeptanzwartezeit T₄ nicht erhalten hat, wird gemäß Block 30 zum Block 18 zurückgekehrt. Ansonsten überprüft die Auswerteschaltung 13 gemäß Block 31 den über die Datenleitung 4-1 übertragenen Datenstrom. Wenn die Auswerteschaltung 13 aufgrund des in das Register 13' eingelesenen Befehls erkennt, daß die speicherprogrammierbare Steuerung einen sogenannten Identifikationslauf durchführt, d.h., daß die Zentraleinheit 2 versucht, zu ermitteln, welche Peripheriebaugruppen 3 mit ihr verbunden sind, schaltet die Auswerteschaltung 13 gemäß Block 32 die sperrbaren Treiber 16-1a und 16-1b permanent durch und sperrt die sperrbaren Treiber 16-1c und 16-1d permanent. Dadurch ist nunmehr die Auswerteschaltung 13 von der Datenleitung 4-1 abgekoppelt, und die Baugruppe 2,3 ist an den Steuerungsbus 4 angekoppelt. Die Baugruppe 3 kann daher nunmehr sowohl lesend als auch schreibend auf den Steuerungsbus 4 zugreifen.

In FIG 3 wurden der besseren Übersichtlichkeit halber einzelne Blöcke vereinfacht dargestellt. So sind beispielsweise die Blockgruppen 23/24, 26/27 und 29/30 in Wirklichkeit Schleifen, während derer laufend abgefragt wird, ob das jeweilige Abbruchkriterium vorliegt. Auch wird selbstverständlich laufend überprüft, ob die Baugruppe 2,3 noch gesteckt ist und ob die Stromversorgung ordnungsgemäß funktioniert. Sobald eine dieser beiden Bedingungen nicht mehr erfüllt ist, wird sofort - gegebenfalls nach Setzen des Merkers M auf den Wert 1 - zu einem der Blöcke 18 oder 19 verzweigt.

Wie aus FIG 2 ersichtlich ist, sind weiterhin alle Busleitungen 4-2 bis 4-5 direkt mit der Auswerteschaltung 13 verbunden. Da die Auswerteschaltung 13 ferner weiß, ob der Busverkehr über die ihr zugeordnete Baugruppe 2,3 erfolgt oder nicht, kann sie entsprechend das Schieberegister 13' und den Schalter 13" bedienen, wenn die Baugruppe 2,3 nicht an den Steuerungsbus 4 angekoppelt ist. Mit anderen Worten: Vor dem ersten Identifikationslauf nach dem Mithör-Ankoppeln der Baugruppe 2,3 hört die Auswerteschaltung 13 den Busverkehr mit und
- überbrückt bei einer Befehlsübertragung mittels des Schalters 13" die Datenleitung 4-1 und koppelt das Schieberegister 13' an die Datenleitung 4-1 an und
- überbrückt bei einer Datenübertragung mittels des Schalters 13" die Datenleitung 4-1 oder schleift das Schieberegister 13' an die Datenleitung 4-1 an, je nach zuletzt übertragenem Befehl.

## Patentansprüche

1. Anschaltverfahren zum Anschalten einer Baugruppe (2,3) einer speicherprogrammierbaren Steuerung an einen Bus (5),
- wobei die Baugruppe (2,3) zumindest über eine erste und eine zweite Versorgungsleitung (11',11") und eine Signalleitung (11-1a,11-1b,11-2 bis 11-5) an den Bus (5) anschließbar ist,
- wobei in mindestens einer der Versorgungsleitungen (11') ein veränderlicher Widerstand (12) angeordnet ist, der von einer Auswerteschaltung (13) hochohmig oder niederohmig steuerbar ist,
- wobei die Auswerteschaltung (13) bei nicht an den Bus (5) angeschlossener Baugruppe (2,3) den veränderlichen Widerstand (12) hochohmig steuert,
mit folgenden Schritten:
- beim Verbinden der Baugruppe (2,3) mit dem Bus (5) wird der veränderliche Widerstand (12) niederohmig gesteuert,
- nach dem Niederohmigsteuern des veränderlichen Widerstands (12) wird eine Hochlaufzeit (T₃) abgewartet,
- der veränderliche Widerstand (12) wird wieder hochohmig gesteuert, wenn ein an einem Prüfeingang (14") der Auswerteschaltung (13) anstehendes Potential nach Ablauf der Hochlaufzeit (T₃) außerhalb eines vorbestimmten Wertebereichs liegt und erst nach Ablauf einer Verbindungszeit (T₁) niederohmig gesteuert wird.

2. Anschaltverfahren nach Anspruch 1, **dadurch gekennzeichnet, daß** das Steuern des veränderlichen Widerstandes (12) von hochohmig auf niederohmig während einer vorbestimmten Anlaufzeit (T2) erfolgt.

3. Anschaltverfahren nach Anspruch 1 oder 2, **dadurch gekennzeichnet, daß** die Baugruppe (2,3) erst dann über die Signalleitung (11-1a,11-1b,11-2 bis 11-5) mit dem Bus (5) verbunden wird, wenn das am Prüfeingang (14") der Auswerteschaltung (13) anstehende Potential nach Ablauf der Hochlaufzeit (T₃) innerhalb des vorbestimmten Wertebereichs liegt.

4. Anschaltverfahren nach Anspruch 3, **dadurch gekennzeichnet, daß** die Baugruppe (2,3) nach dem Verbinden mit dem Bus (5) über die Signalleitung (11-1a,11-1b,11-2 bis 11-5) übertragene Signale empfängt, selbst aber über die Signalleitung (11-1a,11-1b,11-2 bis 11-5) keine Signale sendet.

5. Anschaltverfahren nach Anspruch 4, **dadurch gekennzeichnet,**
- daß die Baugruppe (2,3) die über die Signalleitung (11-1a,11-1b,11-2 bis 11-5) übertragenen Signale auswertet,
- daß die Baugruppe (2,3) der Auswerteschaltung (13) ein Akzeptanzsignal übermittelt, wenn die Baugruppe (2,3) in der Lage ist, die über die Signalleitung (11-1a,11-1b,11-2 bis 11-5) übertragenen Signale auszuwerten, und
- daß die Auswerteschaltung (13) den veränderlichen Widerstand (12) hochohmig steuert, wenn sie nach Ablauf einer Akzeptanzwartezeit (T₄) das Akzeptanzsignal nicht erhalten hat.

6. Anschaltverfahren nach einem der obigen Ansprüche, **dadurch gekennzeichnet,**
- daß von Zeit zu Zeit ermittelt wird, welche Baugruppen (2,3) an den Bus (5) angeschaltet sind, und
- daß die Auswerteschaltung (13) die Baugruppe (2,3) beim ersten Ermitteln der angeschalteten Baugruppen (2,3), das nach Ablauf der Akzeptanzwartezeit (T₄) durchgeführt wird, auch schreibend an den Bus (5) ankoppelt, wenn sie vor Ablauf der Akzeptanzwartezeit (T₄) das Akzeptanzsignal erhalten hat.

7. Anschaltverfahren nach einem der obigen Ansprüche, **dadurch gekennzeichnet,**
- daß die Auswerteschaltung (13) dem Bus (5) zugeordnet ist,
- daß zumindest bei einem Teil der Signalübertragungen die Signalleitung (4-1) durch die Baugruppe (2,3) geschleift wird und
- daß bei nicht an den Bus (5) angeschalteter Baugruppe (2,3) die Auswerteschaltung (13) die Signalleitung (4-1) bei diesen Signalübertragungen ein der Auswerteschaltung (13) zugeordnetes Schieberegister (13') in die Signalleitung (4-1) einschleift.

8. Busanschaltung zum Anschalten einer Baugruppe (2,3) einer speicherprogrammierbaren Steuerung an einen Bus (5),
- wobei die Baugruppe (2,3) zumindest über eine erste und eine zweite Versorgungsleitung (11',11") und eine Signalleitung (11-1a,11-1b,11-2 bis 11-5) an den Bus anschließbar ist,
- wobei in mindestens einer der Versorgungsleitungen (11') ein veränderlicher Widerstand (12) mit einem Steuereingang angeordnet ist, der mit einer Auswerteschaltung (13) verbunden ist, mittels derer der veränderliche Widerstand (12) hochohmig oder niederohmig steuerbar ist,
- wobei die Auswerteschaltung (13) einen Prüfeingang (14") aufweist, mittels dessen das an der Baugruppe (2,3) anstehende Potential erfaßbar ist,
- wobei die Auswerteschaltung (13) derart ausgebildet ist, daß sie
-- bei nicht an den Bus (5) angeschlossener Baugruppe (2,3) den veränderlichen Widerstand (12) hochohmig steuert,
-- beim Verbinden der Baugruppe (2,3) mit dem Bus (5) den veränderlichen Widerstand (12) niederohmig steuert,
-- nach dem Niederohmigsteuern des veränderlichen Widerstands (12) eine Hochlaufzeit (T₃) abwartet,
-- den veränderlichen Widerstand (12) wieder hochohmig steuert, wenn das an dem Prüfeingang (14") anstehende Potential nach Ablauf der Hochlaufzeit (T₃) außerhalb eines vorbestimmten Wertebereichs liegt und
-- den veränderlichen Widerstand (12) erst nach Ablauf einer Verbindungszeit (T₁) niederohmig steuert.

9. Busanschaltung nach Anspruch 8, **dadurch gekennzeichnet, daß** die Auswerteschaltung (13) derart ausgebildet ist, daß sie den veränderlichen Widerstand (12) erst nach Ablauf einer Verbindungszeit (T₁) niederohmig steuert.

10. Busanschaltung nach Anspruch 8, 9 oder 10, **dadurch gekennzeichnet, daß** die Auswerteschaltung (13) derart ausgebildet ist, daß sie die Baugruppe (2,3) erst dann über die Signalleitung (11-1a,11-1b,11-2 bis 11-5) mit dem Bus verbindet, wenn das am Prüfeingang (14") der Auswerteschaltung (13) anstehende Potential nach Ablauf der Hochlaufzeit (T₃) innerhalb des vorbestimmten Wertebereichs liegt.

11. Busanschaltung nach Anspruch 10, **dadurch gekennzeichnet**,
- daß die Baugruppe (2,3) derart ausgebildet ist, daß sie nach dem Verbinden mit dem Bus (5)
-- über die Signalleitung (4-1) übertragene Signale empfängt und auswertet, selbst aber über die Signalleitung (4-1) keine Signale sendet,
-- der Auswerteschaltung (13) ein Akzeptanzsignal übermittelt, wenn sie in der Lage ist, die über die Signalleitung (4-1) übertragenen Signale auszuwerten, und
- daß die Auswerteschaltung (13) derart ausgebildet ist, daß sie den veränderlichen Widerstand (12) hochohmig steuert, wenn sie nach Ablauf einer Akzeptanzwartezeit (T₄) das Akzeptanzsignal nicht erhalten hat.

12. Busanschaltung nach einem der Ansprüche 8 bis 11, **dadurch gekennzeichnet,**
- daß der Bus (5) derart ausgebildet ist, daß er von Zeit zu Zeit ermittelt, welche Baugruppen (2,3) an ihn angeschaltet sind, und
- daß die Auswerteschaltung (13) derart ausgebildet ist, daß sie die Baugruppe (2,3) beim ersten Ermitteln der angeschalteten Baugruppen (2,3), das nach Ablauf der Akzeptanzwartezeit (T₄) durchgeführt wird, auch schreibend an den Bus (5) ankoppelt, wenn sie vor Ablauf der Akzeptanzwartezeit (T₄) das Akzeptanzsignal erhalten hat.

13. Busanschaltung nach einem der Ansprüche 8 bis 12, **dadurch gekennzeichnet,**
- daß sie dem Bus (5) zugeordnet ist,
- daß zumindest bei einem Teil der Signalübertragungen die Signalleitung (4-1) durch die Baugruppe (2,3) geschleift wird und
- daß der Auswerteschaltung (13) mindestens ein Schalter (13") zugeordnet ist, mittels dessen bei nicht an den Bus (5) angeschalteter Baugruppe (2,3) die Signalleitung (4-1) bei diesen Signalübertragungen ein ebenfalls der Auswerteschaltung (13) zugeordnetes Schieberegister (13') in die Signalleitung (4-1) einschleifbar ist.

## Claims

1. Connection method for connecting an assembly (2, 3) of a programmable logic controller to a bus (5),
- it being possible to connect the assembly (2, 3) to configure it to the bus (5) at least via a first and a second supply line (11', 11") and a signal line (11-1a, 11-1b, 11-2 to 11-5),
- a variable resistor (12) being arranged in at least one of the supply lines (11'), which resistor can be controlled to have a high resistance or a low resistance by an evaluation circuit (13),
- the evaluation circuit (13) controlling the variable resistor (12) to have a high resistance when an assembly (2, 3) is not connected to the bus (5),
having the following steps:
- when the assembly (2, 3) is connected to the bus (5), the variable resistor (12) is controlled to have a low resistance,
- after the variable resistor (12) has been controlled to have a low resistance, there is a wait until a run-up time (T₃) has elapsed,
- the variable resistor (12) is controlled to have a high resistance again if a potential present at a test input (14") of the evaluation circuit (13) lies outside a predetermined value range after the run-up time (T₃) has elapsed and is controlled to have a low resistance only after a connection time (T₁) has elapsed.

2. Connection method according to Claim 1, characterized in that the controlling of the variable resistor (12) from a high resistance to a low resistance takes place during a predetermined starting time (T₂).

3. Connection method according to Claim 1 or 2, characterized in that the assembly (2, 3) is connected to the bus (5) via the signal line (11-1a, 11-1b, 11-2 to 11-5) only when the potential present at the test input (14") of the evaluation circuit (13) lies within the predetermined value range after the run-up time (T₃) has elapsed.

4. Connection method according to Claim 3, characterized in that after being connected to the bus (5), the assembly (2, 3) receives signals submitted via the signal line (11-1a, 11-1b, 11-2 to 11-5), but does not itself transmit signals via the signal line (11-1a, 11-1b, 11-2 to 11-5).

5. Connection method according to Claim 4, characterized
- in that the assembly (2, 3) evaluates the signals transmitted via the signal line (11-1a, 11-1b, 11-2 to 11-5),
- in that the assembly (2, 3) communicates an acceptance signal to the evaluation circuit (13) if the assembly (2, 3) is able to evaluate the signals transmitted via the signal line (11-1a, 11-1b, 11-2 to 11-5), and
- in that the evaluation circuit (13) controls the variable resistor (12) to have a high resistance if it has not received the acceptance signal after an acceptance waiting time (T₄) has elapsed.

6. Connection method according to one of the preceding claims, characterized
- in that from time to time a determination is made of which assemblies (2, 3) are connected to the bus (5), and
- in that, during the first determination of the connected assemblies (2, 3), which is carried out after the acceptance waiting time (T₄) has elapsed, the evaluation circuit (13) couples the assembly (2, 3) to the bus (5) in a writing manner, too, if it has received the acceptance signal before the acceptance waiting time (T₄) has elapsed.

7. Connection method according to one of the preceding claims, characterized
- in that the evaluation circuit (13) is assigned to the bus (5),
- in that the signal line (4-1) is looped through the assembly (2, 3) at least during part of the signal transmissions, and
- in that when an assembly (2, 3) is not connected to the bus (5), the evaluation circuit (13) loops a shift register (13'), which is assigned to the evaluation circuit (13), into the signal line (4-1) during these signal transmissions.

8. Bus access circuit for connecting an assembly (2, 3) of a programmable logic controller to a bus (5),
- it being possible to connect the assembly (2, 3) to the bus at least via a first and a second supply line (11', 11") and a signal line (11-1a, 11-1b, 11-2 to 11-5),
- there being arranged in at least one of the supply lines (11') a variable resistor (12) having a control input, which is connected to an evaluation circuit (13) by means of which the variable resistor (12) can be controlled to have a high resistance or a low resistance,
- the evaluation circuit (13) having a test input (14") by means of which it is possible to acquire the potential present at the assembly (2, 3),
- the evaluation circuit (13) being designed in such a way that it
-- controls the variable resistor (12) to have a high resistance when an assembly (2, 3) is not connected the bus (5),
-- controls the variable resistor (12) to have a low resistance when the assembly (2, 3) is connected to the bus (5),
-- waits for a run-up time (T₃) to elapse after the variable resistor (12) has been controlled to have a low resistance,
-- controls the variable resistor (12) to have a high resistance again if the potential present at the test input (14") lies outside a predetermined value range after the run-up time (T₃) has elapsed, and
-- controls the variable resistor (12) to have a low resistance only after a connection time (T₁) has elapsed.

9. Bus access circuit according to Claim 8, characterized in that the evaluation circuit (13) is designed in such a way that it controls the variable resistor (12) to have a low resistance only after a connection time (T₁) has elapsed.

10. Bus access circuit according to Claim 8, 9 or 10, characterized in that the evaluation circuit (13) is designed in such a way that it connects the assembly (2, 3) to the bus via the signal line (11-1a, 11-1b, 11-2 to 11-5) only when the potential present at the test input (14") of the evaluation circuit (13) lies within the predetermined value range after the run-up time (T₃) has elapsed.

11. Bus access circuit according to Claim 10, characterized
- in that the assembly (2, 3) is designed in such a way that after being connected to the bus (5), it
-- receives and evaluates signals transmitted via the signal line (4-1), but does not itself transmit signals via the signal line (4-1),
-- communicates an acceptance signal to the evaluation circuit (13) if it is able to evaluate the signals transmitted via the signal line (4-1), and
- in that the evaluation circuit (13) is designed in such a way that it controls the variable resistor (12) to have a high resistance if it has not received the acceptance signal after an acceptance waiting time (T₄) has elapsed.

12. Bus access circuit according to one of Claims 8 to 11, characterized
- in that the bus (5) is designed in such a way that from time to time it determines which assemblies (2, 3) are connected to it, and
- in that the evaluation circuit (13) is designed in such a way that, during the first determination of the connected assemblies (2, 3), which is carried out after the acceptance waiting time (T₄) has elapsed, this couples the assembly (2, 3) to the bus (5) in a writing manner, too, if it has received the acceptance signal before the acceptance waiting time (T₄) has elapsed.

13. Bus access circuit according to one of Claims 8 to 12, characterized
- in that it is assigned to the bus (5),
- in that the signal line (4-1) is looped through the assembly (2, 3) at least during part of the signal transmissions, and
- in that at least one switch (13") is assigned to the evaluation circuit (13), by means of which switch, when an assembly (2, 3) is not connected to the bus (5), a shift register (13'), which is likewise assigned to the evaluation circuit (13), can be looped into the signal line (4-1) during these signal transmissions.

## Revendications

1. Procédé de connexion pour connecter un module (2,3) d'un système à programme enregistré à un bus (5),
- le module (2,3) pouvant être raccordé au moins par l'intermédiaire d'une première ligne (11') d'alimentation et d'une deuxième ligne (11") d'alimentation et d'une ligne (11-1a, 11-1b, 11-2 à 11-5) de signaux au bus (5),
- une résistance (12) variable, qui peut être commandée à haute impédance ou à basse impédance par un circuit (13) d'exploitation, étant présente dans au moins une des lignes (11') d'alimentation,
- le circuit (13) d'exploitation commandant à haute impédance la résistance (12) variable lorsque le module (2,3) n'est pas raccordé au bus (5),
comportant les étapes suivantes :
- lors de la liaison du module (2,3) au bus (5), la résistance (12) variable est commandée à basse impédance,
- après la commande à basse impédance de la résistance (12) variable, on attend une durée (T₃) d'arrivée à plein régime,
- la résistance (12) variable est commandée à nouveau à haute impédance si un potentiel s'appliquant à une entrée (14") de contrôle du circuit (13) d'exploitation est, après écoulement de la durée (T₃) d'arrivée au plein régime, à l'extérieur d'un intervalle de valeur prédéterminé et n'est commandée à basse impédance qu'après écoulement d'une durée (T₁) de liaison.

2. Procédé de connexion suivant la revendication 1, caractérisé en ce que la commande de la résistance (12) variable de l'état haute impédance à l'état à basse impédance s'effectue pendant une durée (T₂) transitoire prédéterminée.

3. Procédé de connexion suivant la revendication 1 ou 2, caractérisé en ce que le module (2,3) n'est relié au bus (5) par l'intermédiaire de la ligne (11-1a, 11-1b, 11-2 à 11-5) de signaux que si le potentiel s'appliquant à l'entrée (14") de contrôle du circuit (13) d'exploitation est, après écoulement de la durée (T₃) d'arrivée au plein régime, à l'intérieur de l'intervalle de valeur prédéterminé.

4. Procédé de connexion suivant la revendication 3, caractérisé en ce que le module (2,3) reçoit, après la liaison au bus (5), des signaux transmis par l'intermédiaire de la ligne (11-1a, 11-1b, 11-2 à 11-5) de signaux, mais n'émet pas lui-même de signaux par l'intermédiaire de la ligne (11-1a, 11-1b, 11-2 à 11-5) de signaux.

5. Procédé de connexion suivant la revendication 4, caractérisé en ce que
- le module (2,3) exploite les signaux transmis par l'intermédiaire de la ligne (11-1a, 11-1b, 11-2 à 11-5) de signaux,
- le module (2,3) transmis au circuit (13) d'exploitation un signal d'acceptation si le module (2,3) est en mesure d'exploiter les signaux transmis par l'intermédiaire de la ligne (11-1a, 11-1b, 11-2 à 11-5) de signaux, et
- le circuit (13) d'exploitation commande à haute impédance la résistance (12) variable s'il n'a pas reçu le signal d'acceptation après écoulement d'une durée de signaux, et
- le circuit (13) d'exploitation commande à haute impédance la résistance (12) variable s'il n'a pas reçu le signal d'acceptation après écoulement d'une durée (T₄) d'attente d'acceptation.

6. Procédé de connexion suivant l'une des revendications précédentes, caractérisé en ce que
- il est déterminé de temps à autre les modules (2,3) qui sont raccordés au bus (5) et
- le circuit (13) d'exploitation raccorde aussi en écriture au bus (5) le module (2,3) lors de la première détermination du module (2,3) raccordé qui est effectuée après écoulement de la durée (T₄) d'attente d'acceptation s'il a reçu le signal d'acceptation avant écoulement de la durée (T₄) d'attente d'acceptation.

7. Procédé de connexion suivant l'une des revendications précédentes, caractérisé en ce que
- le circuit (13) d'exploitation est associé au bus (5),
- la ligne (4-1) de signaux est mise en boucle par le module (2,3) au moins pour une partie des transmissions de signaux, et
- lorsque le module (2,3) n'est pas raccordé au bus (5), le circuit (13) d'exploitation met en boucle dans la ligne (4-1) de signaux un registre (13') à décalage associé au circuit (13) d'exploitation, pour ces transmissions de signaux.

8. Interface de bus pour raccorder un module (2,3) d'un système à programme enregistré à un bus (5),
- le module (2,3) pouvant être raccordé au bus au moins par l'intermédiaire d'une première ligne (11') d'alimentation et d'une deuxième ligne (11") d'alimentation et d'une ligne (11-1a, 11-1b, 11-2 à 11-5) de signaux,
- une résistance (12) variable, qui est reliée à un circuit (13) d'exploitation au moyen duquel la résistance (12) variable est commandée à haute impédance ou à basse impédance, étant montée dans au moins l'une des lignes (11') d'alimentation,
- le circuit (13) d'exploitation comportant une entrée (14") de contrôle au moyen de laquelle le potentiel s'appliquant au module (2,3) peut être détecté,
- le circuit (13) d'exploitation étant réalisé de telle manière que
• lorsque le module (2,3) n'est pas raccordé au bus (5), il commande à haute impédance la résistance (12) variable,
• lors de la liaison du module (2,3) au bus (5), il commande à basse impédance la résistance (12) variable,
• après la commande à basse impédance de la résistance (12) variable, il attend l'écoulement d'une durée (T₃) d'arrivée à plein régime,
• il commande à nouveau à haute impédance la résistance (12) variable si le potentiel s'appliquant à l'entrée (14") de contrôle est, après écoulement de la durée (T₃) d'arrivée à plein régime, à l'extérieur d'un domaine de valeur prédéterminé et
• il ne commande à basse impédance la résistance (12) variable qu'après écoulement d'une durée (T₁) de liaison.

9. Interface de bus suivant la revendication 8, caractérisé en ce que le circuit (13) d'exploitation est réalisé de manière à ne commander à basse impédance la résistance (12) variable qu'après écoulement d'une durée (T₁) de liaison.

10. Interface de bus suivant la revendication 8, 9 ou 10, caractérisée en ce que le circuit (13) d'exploitation est réalisé de manière à ne relier au bus le module (2,3) par l'intermédiaire de la ligne (11-1a, 11-1b, 11-2 à 11-5) de signaux que si le potentiel s'appliquant à l'entrée (14") de contrôle du circuit (13) d'exploitation est, après écoulement de la durée (T₃) d'arrivée à plein régime, dans le domaine de valeur prédéterminé.

11. Interface de bus suivant la revendication 10, caractérisé en ce que
- le module (2,3) est réalisé de manière à, après la liaison au bus (5),
• recevoir et exploiter des signaux transmis par l'intermédiaire de la ligne (4-1) de signaux, mais à ne pas émettre de signaux par l'intermédiaire de la ligne (4-1) de signaux,
• à transmettre au circuit (13) d'exploitation un signal d'acceptation s'il est en mesure d'exploiter les signaux transmis par l'intermédiaire de la ligne (4-1) de signaux, et
- le circuit (13) d'exploitation est réalisé de manière à commander à haute impédance la résistance (12) variable si, après écoulement d'une durée (T₄) d'attente d'acceptation, il n'a pas obtenu le signal d'acceptation.

12. Interface de bus suivant l'une des revendications 8 à 11, caractérisé en ce que
- le bus (5) est réalisé de manière à déterminer de temps à autre les modules (2,3) qui lui sont raccordés, et
- le circuit (13) d'exploitation est réalisé de manière à raccorder aussi en écriture au bus (5) le module (2,3) à la première détermination des modules (2,3) raccordés qui a été effectuée après écoulement de la durée (T₄) d'attente d'acceptation, si, avant écoulement de la durée (T₄) d'attente d'acceptation, il a reçu le signal d'acceptation.

13. Interface de bus suivant l'une des revendications 8 à 12, caractérisée en ce que
- il est associé au bus (5),
- la ligne (4-1) de signaux est mise en boucle par le module (2,3) au moins pour une partie des transmission de signaux, et
- il est associé au circuit (13) d'exploitation au moins un interrupteur (13") au moyen duquel, lorsque le module (2,3) n'est pas raccordé au bus (5), un registre (13') à décalage associé également au circuit (13) d'exploitation peut être mis en boucle dans la ligne (4-1) de signaux pour ces transmissions de signaux.
